# EUROPEAN PATENT APPLICATION

(11) **EP 2 187 174 A1**
(43) Date of publication of application: **19.05.2010**
(21) Application number: 08169137.0
(22) Date of filing: 14.11.2008
(51) Int. Cl.: G01D 4/00, G01F 15/06

(54) **Communication device arranged for wireless communication with a consumption meter**

(71) Applicant: KAMSTRUP A/S, 8660 Skanderborg (DK)
(72) Inventor: Drachmann, Jens, 8260 Viby J (DK)
(74) Representative: Plougmann & Vingtoft A/S

(57) **Abstract**

A communication device CD suited for communicating with a consumption meter placed in a well or manhole. The device CD including a casing CS suited for position on top of a cover or lid covering a well or manhole. The casing CS is generally flat and provides a watertight cavity for housing: 1) a wireless RF receiver RFR to receive a first RF signal RF1 including first data D1, 2) a processor to convert the first data D1 is into second data D2, e.g. by a simple copy or by selecting part of the first data D1, e.g. consumption data and/or consumption meter ID, 3) a wireless RF transmitter RFT to transmit a second RF signal F2 including the second data D1, and 4) a battery B to power receiver RFR, processor P, and transmitter RFT. The device CD may serve as a radio repeater or a gateway. To save battery power, the device CD is preferably arranged to only activate the receiver RFR in time intervals where it is expected to receive the first RF signal RF1. Especially, the device CD may synchronize itself to a regular time interval for incoming signal RF1 in order to save power when communicating with a device transmitting at regular but unknown time intervals. The device CD may further save power before entering normal operation by providing a stand-by mode from which it can be woke-up by receiving a dedicated wake-up signal, e.g. an RF signal, an optical signal, a mechanical/vibration signal, or an acoustical signal.

## Description

### Field of the invention

The invention relates to the field of communication devices, more specifically to communication devices arranged for RF communication. More specifically the invention provides an RF communication device suitable for communication with a consumption meter, such as a water meter or a gas meter. Especially, the communication device may act as a radio repeater or gateway.

### Background of the invention

Typically, consumption meters for measuring a consumed amount of a physical entity, such as water meters or gas meters are mounted directly on the water or gas pipe leading to a consumer. Often, such meters are placed in a well, manhole or pit in which the pipes are available, thus avoiding location of the consumption meter inside the consumer's dwelling or company premises. For modern consumption meters with automatic remote reading capabilities such position in a well at a considerable distance below ground level is problematic with respect to maintain an acceptable distance range of coverage. The reason is that the reading values are transmitted by means of air-borne Radio Frequency (RF) signals and such signals are significantly attenuated in the soil surrounding the well with a limited directional coverage from the consumption meter as a result.

One type of solution to this problem is to place a RF antenna above ground level and then wire-connect this antenna to the consumption meter in the well. However, such wire connection is vulnerable to wear, damages, and is a critical component with respect to possible user interference with the meter function. Further, such solution is rather complex, and therefore expensive, with respect to assembly.

US 2001/0011009 A1 describes another solution in which a radio repeater is integrated into a special manhole cover for covering the man-hole in which a consumption meter is located. The radio repeater receives a RF signal from the consumption meter with an RF receiver placed in a lower part of the manhole cover, while an RF transmitter is arranged in an upper part of the manhole cover. The RF transmitter then re-transmits the RF signal received from the consumption meter.

However, the solution described in US 2001/0011009 A1 implies that special manhole covers are designed and manufactured to fit to all sizes of manholes and well in which consumption meters can possibly be positioned. Further, to introduce such dedicated manhole cover provides a significant logistical problem, since often the manhole or well covers represent a large weight and size. Thus, for an area with many consumers, it is a comprehensive task to distribute new manhole covers, to replace the old covers on-site, and to transport the old manhole covers away from the consumer.

### Summary of the invention

Thus, according to the above explanation, it is an object of the present invention to provide a communication device which is capable of receiving and repeating data received in an RF signals from a consumption meter placed in a manhole or well. The communication device must be easy to manufacture and install, and it must be reliable in function, also with respect to resistance to physical damage factors.

In a first aspect, the invention provides a communication device including:
- a casing suited for position on top of a cover or lid covering a cavity, wherein the casing has an upper side with a generally flat and provides a watertight cavity for housing:
   - a wireless RF receiver arranged to receive a first RF signal with first data represented therein,
   - a processor arranged to convert the first data into second data according to a predefined algorithm,
   - a wireless RF transmitter arranged to transmit a second RF signal with the second data represented therein, and
   - a battery arranged to power the receiver, the processor, and the transmitter.

Such communication device is advantageous e.g. for use as a radio repeater for an RF transmitting consumption meter positioned in a cavity in the form of a well or manhole. The communication device has a casing suited for position on top of the well or manhole cover. With normal well or manhole covers of polymeric material or concrete, the communication device can easily receive the first RF signal from the consumption meter through the cover due to a short distance. Placed on top of the cover, the RF transmitter is placed on ground level and thus has the ability to transmit the second RF signal more efficiently and in all directions in an upper hemisphere without any interference with the ground.

With its generally flat shaped casing housing the necessary electronic components in a watertight environment, the communication device can be placed also where there is at least limited traffic without significant disturbance, thus it can be used e.g. mounted on a well cover located in a drive way of a house. Thus, preferably the casing is shaped, e.g. a flat disk shape, and made from a material allowing drive over by a car, e.g. a polymeric material. One clear advantage over the radio repeaters shown in US 2001/0011009 A1 is that existing well or manhole covers can be maintained, and thus only the communication device needs to be distributed and installed. This can be done easily without the need to enter the well or manhole where the consumption meter is placed. Furthermore, it is only necessary to manufacture one size communication device which can fit all well or manhole covers. This is highly advantageous with respect to low cost large scale production and it helps facilitate installation since the installing person does not need to bring specific types of devices to specific consumers. Still further, from a logistic point of view the size and weight of a communication device according to this invention can be much smaller than the manhole cover with integrated radio repeater disclosed in US 2001/0011009 A1. Still further, design changes, e.g. in the electronic circuits inside the communication device occur, and such changes are easily performed since the devices can rather easily be replaced by a new communication device. The same applies, in case of damage and during run-out of the battery.

In one embodiment, the wireless RF transmitter is arranged to repeat transmission of the second RF signal, e.g. by repeating transmission of the second RF signal at regular time intervals. Thus, even though the communication device only receives the first RF signal once from a consumption meter, the communication device may transmit a repeated or slightly altered version thereof several times, e.g. at regular time intervals until a new RF signal is received from the consumption meter.

By 'predefined' algorithm is understood an algorithm serving to convert the first data to the second data which is defined prior to entering normal working conditions. Thus, it is to be understood that the communication device may be prepared for download of another algorithm for replacing a currently installed algorithm. However, in a simple embodiment, the predefined algorithm is stored in a Read Only Memory and thus fixed.

In one embodiment, the predefined algorithm specifies that the second data is identical to the first data, and thus in this embodiment the communication device acts as a pure repeater, especially the carrier frequency of the first and second RF signals can also be identical. In other embodiments, the communication device may act as a gateway to other frequencies, modulation forms, protocols etc.

In one embodiment, the predefined algorithm specifies that the second data includes at least an Identification number extracted from the first data. In this embodiment, an ID number of a consumption meter can be extracted from the first data received from the consumption meter, and this ID number can then be included in the second data transmitted in the second RF signal so as to identify the transmission.

In a preferred embodiment, the second data includes data representing a consumed amount of a physical entity extracted from the first data, e.g. a consumption value in encrypted form. Thus, in this embodiment reading data from a consumption meter can be transmitted by the communication device thereby facilitating RF remote reading of the consumption meter.

In a power saving embodiment, the communication device has a predefined time interval in which the RF receiver is sensitive to the first RF signal. Thus, the device only listens for incoming RF signals in a limited period, and in all other periods, the RF receiver can be switched off and thus save power. This embodiment is suited for saving power when working together with a consumption meter which transmits the first RF signal at a regular interval, such as a known regular time interval to which the communication device can then be programmed. In one embodiment, the communication device is arranged to synchronize to receive a first RF signal at a fixed time interval. Such embodiment can save power also when communicating with a consumption meter transmitting at a given but unknown regular time interval by adapting the listening intervals according to the consumption meter.

The communication device may include a stand-by mode of operation in which at least the transmitter stops transmitting the second RF signal, e.g. by switching off power to the RF transmitter and thus save power. Especially, both of the RF transmitter, the processor and the RF receiver may be switched off in the stand-by mode in order to save power in a period after the communication device has been manufactured and before it is installed and enters into normal working conditions. Hereby the battery life is increased, and it is possible to manufacture the communication device in a large scale production including installation of the battery, and then store the devices for later installation and use. In one embodiment, the communication device is arranged to switch from the stand-by mode of operation to a normal mode of operation in response to a predefined wake-up signal. Thus, a dedicated signal can be used to wake-up the communication device in connection with installation and entrance into normal function. Especially, the communication device may be designed to be responsive to a wake-up signal such as a dedicated RF signal (e.g. utilizing the RF receiver or an additional RF receiver tuned to receive a dedicated frequency), a mechanical interaction of the casing (e.g. by means of an accelerometer for sensing a shock or harmonic vibration exceeding a predefined strength, such as in a predefined direction in relation to the casing), an optical signal (e.g. an infrared signal received through the casing though an optical "eye"), or an acoustic signal (e.g. a specific tone or complex of tones sensed by a microphone positioned within the cavity of the casing).

In order to further save power, the communication device may be arranged to switch to the stand-by mode of operation after a predefined time interval in which the RF receiver has not received an incoming RF signal.

It is to be understood that various RF transmitter and receiver technologies may be applied, depending on the desired RF frequency range. However, in preferred embodiment, the RF transmitter transmits the second RF signal by means of a slot antenna or a patch antenna, micro-strip antenna, chip antenna, PCB antenna, or pifa antenna. Such antennas can all be produced very flat and are thus suited to fit inside the generally flat casing of the communication device. The first RF signal and the second RF signal may have the same carrier frequencies, or they may have different carrier frequencies. In order to suppress possibly interfering incoming RF signals, a directional sensitivity of the RF receiver may be limited to suppress incident RF signals from directions corresponding to an upper side of the casing. In other words, the RF receiver may be designed with a directional sensitivity characteristics such that it is sensitive only to incoming RF signals from below, i.e. when the communication device is installed for normal operation on top of a well or manhole cover. The RF transmitter may be designed with a directional transmission characteristic such that the second RF signal is transmitted with a directional pattern covering at least directions corresponding to an upper side of the casing, e.g. at least covering an upper hemisphere when the communication device is installed for normal operation.

In one embodiment, the communication device is arranged for two-way communication with a device located in a direction corresponding to a lower part of the casing. Thus, in such embodiment, the communication device may be arranged to transmit an RF signal to a consumption meter placed below. Alternatively, or additionally, the communication device may be arranged for two-way communication with a device located in a direction corresponding to an upper part of the casing. Thus, in such embodiment the communication device can e.g. receive a request for data via an incoming RF signal.

By 'generally flat shape' of the casing is understood a casing with a shape free from abrupt upward protruding elements that may interfere with pedestrians and vehicles passing the communication device when mounted on top of a well or manhole cover. The casing is preferably made from a material and with a shape such that the communication device is able to withstand running over by a car, when placed on top of the cover or lid covering the cavity. Such embodiments allow the communication device to be used also for places where there is at least a limited traffic. The casing may be made from a polymeric material, preferably with a low water permeability, such as High Density Poly-Ethylene (HDPE). The casing may have a metal part cast into such polymeric material, such as a metal part forming a part of an antenna for the Radio Frequency transmitter (RFT) or such as a metal part serving to reinforce the casing (CS). The casing may be manufactured in two pieces: an upper piece and a lower piece suited for providing a watertight cavity inside when mounted together with an intermediate watertight sealing.

The casing may include attachment means on its outer surface for attaching the casing to the cover or lid. E.g. casing may include a threaded hole suited for screw mounting the casing to the well or manhole cover from below. Alternatively, the casing may be fixed to the cover by means of though-going holes arranged for screws penetrating a part of the casing into the cover or lid. More alternatively, the casing may be attached to the cover or lid by means of adhesives, double-adhesive tape, or by means of some kind of fittings or mountings. The casing may have a width which is at least 5 times its height, such as 5-10 times its height, or such as 10-15 times its height, and the casing may be disk shaped, e.g. with a rather flat lower part and a slightly more curved upper part. The upper surface is preferably shaped and/or made of a material such that it is not slippery even when humid. The casing may have a lower side which is generally flat, so at so fit on top of a generally flat cover. However, the casing may have a lower side which is not flat, e.g. with a central protrusion which therefore requires modification of the cover in order for the casing to fit onto the cover. E.g. it may be required to make a hole in the cover in order for a protrusion of a lower side of the casing to fit into the hole of the cover. In this way it is possible to make the casing even more flat on its upper side, since space requiring components such as the battery may be located in such protruding lower part of the casing.

It is appreciated that the single embodiments described above may be combined in any way.

In a second aspect, the invention provides a consumption meter system including
- a consumption meter arranged to measure a quantity of a physical entity, wherein the consumption meter is arranged to transmit a first Radio Frequency signal including data representing the measured quantity, and
- a communication device according to the first aspect.

Especially, the consumption meter may be arranged for position in a cavity, such as a well or a man-hole or a pit, and the communication device is then arranged for position on top of a cover or lid covering the cavity. The consumption meter may be a water meter or a gas meter.

It is appreciated that the same embodiment and advantages mentioned for the first aspects apply as well for the second aspect.

### Brief description of drawings

In the following, the invention will be described in more details by referring to embodiments illustrated in the accompanying drawings, of which
Fig. 1 illustrates a side section of a well in which a consumption meter is mounted and a communication device embodiment in communication with the water meter,
Fig. 2 illustrates a diagram form of a simple embodiment of the communication device,
Fig. 3 illustrates a side view, an upper view and a section view of one embodiment, and
Fig. 4 illustrates an exploded view of the embodiment from Fig. 3.

### Detailed description of the invention

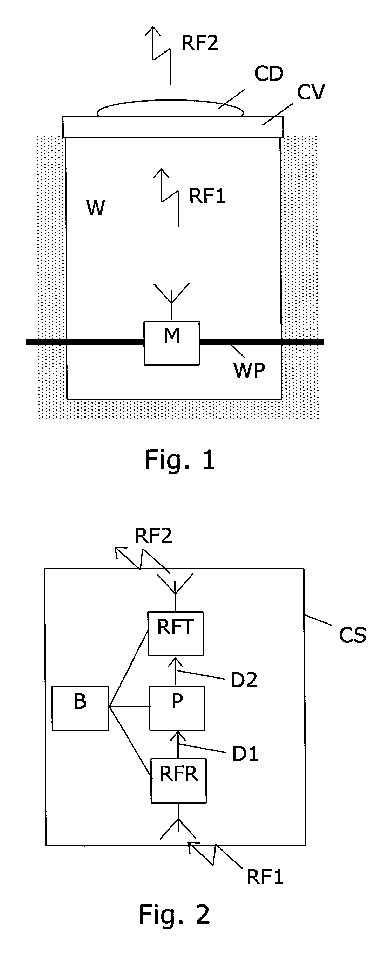

Fig. 1 illustrates a side section of a communication device CD positioned on top of a cover CV covering an opening of a well W in which a water meter M is mounted to measure an amount of cold water flowing in a water pipe WP towards a water consumer. The water meter M transmits at regular time intervals a first wireless RF signal RF1, e.g. the first wireless RF signal RF1 may have a carrier frequency of such as: 169 MHz, 433 MHz, 868 MHz, or 2,4 GHz . The first RF signal RF1 includes data represented therein, and the data preferably includes data representing an ID number identifying the water meter M and a value representing the consumed amount of water measured by the meter M. In a simple embodiment, the communication device CD receives the first RF signal RF1 and transmit a second wireless RF signal RF2 being a copy of the first RF signal RF1, i.e. including the same data and with the same carrier frequency as the first RF signal RF. Thus, the function of the communication device in such embodiment is a simple radio repeater.

In order to provide a general non-intrusive appearance and resistance against physical damage, the shape of the casing of the communication device CD is rather crucial and should be generally flat, preferably the casing shape and its physical structure should be selected such that it is able to withstand driving over by a car. In Fig. 1 the casing of the communication device CD is sketched with a flat bottom part and a slightly curved upper part. In such embodiment the bottom part suits the flat upper surface of a normal well or manhole cover, and the upper part provides a slight ramp effect. Such ramp effect will facilitate drive over by a car, and it will help reduce lateral forces during drive over that would tend to push the communication device CD laterally and thus out of its intended position which would normally be at a centre of the well or manhole cover. The casing of the communication device CD may be generally disk shaped, i.e. generally circular in shape when seen from above (i.e. not visible on Fig. 1).

Fig. 2 illustrates in diagram form vital parts of a communication device CD embodiment. A casing CS provides a watertight cavity housing an RF receiver RFR, an RF transmitter RFT, a processor P, and a battery for powering all of the aforementioned circuits. Note that in Fig. 2 the casing CS is not illustrated with a preferred shape but merely as a component providing a cavity for housing the mentioned components. The RF receiver RFR receives a wireless first RF signal and extracts first data D1 represented therein. The first data D1 is then processed by a processor P that converts the data to second data D2 according to a predefined algorithm. As mentioned, the algorithm may simply define that the second data D2 is identical to the first data D1. However, the algorithm may select only specific parts of the first data to be included in the second data D2. Alternatively, the algorithm may define that the second data D2 includes all of the first data D1 together with additional data. E.g. such additional data may be utilized to communicate if the battery B is low and therefore needs to be replaced soon. Finally, the RF transmitter RFT transmit a second wireless RF signal RF2 with the second data D2 represented therein.

In principle, part of or all of the antennas associated with either the receiver RFR or the transmitter RFT may be positioned outside the casing CS or partly integrated with surface of the casing CS, with only the most vulnerable electronic components of the receiver RFR and transmitter RFT positioned within the watertight casing. However, in preferred embodiments, the entire antenna parts are also enclosed by the watertight casing CS in order to provide a structure with as low sensitivity to mechanical damage as possible. The casing CS is then preferably made from a material which can easily be penetrated by RF waves, while the material is preferably at the same time watertight or at least substantively watertight.

The receiver RFR and the transmitter RFT may be integrated on one Printed Circuit Board (PCB) or be implemented in respective PCBs with their respective antennas implemented in the form of patch or micro-strip type antennas. In such embodiment, the PCB with the receiver RFR can then be located in a lower part of the casing CS cavity, while the PCB with the transmitter RFT is located in an upper part of the casing CS cavity. The necessary electronic circuits for implementing the processor P for converting data, and possibly also controlling the general function of the device CD, may be located either on the receiver PCB, on the transmitter PCB, or on a separate PCB.

In one embodiment, the casing CS is cast in one piece around all electronic components receiver RFR, transmitter RFT, processor P, and battery B. Hereby maximum security for a watertight structure is provided. However, other forms of assemblies of the casing CS in two or more separate pieces will be acceptable to provide a watertight cavity inside the casing CS at normal pressure conditions, e.g. using appropriate sealing materials such as known in the art and/or providing the watertight cavity by means of an inside casing or foil positioned inside the outer casing CS.

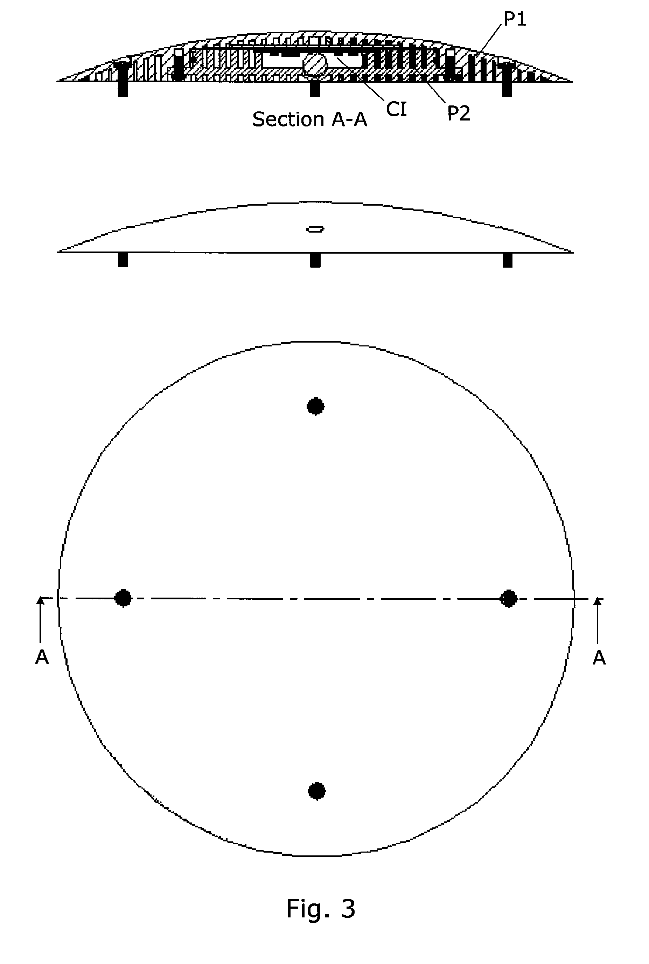

Fig. 3 illustrates different views of a circular-shaped embodiment with an outer height dimension of 30 mm, and an outer diameter of 300 mm. The middle part of Fig. 3 is a side view illustrating that the communication device has a smooth and curved shape in order to allow pedestrians, bicycles and motor vehicles to pass over the communication device without any significant interference. Further, its surface is preferably of a material and/or shaped such that it is not slippery even when the surface is humid. The upper view of the device illustrates the circular shape and four through-going screws for attaching the device to the cover of the manhole/well/pit.

The section A-A view illustrates that the device is assembled from an upper part P1 merely serving for providing a surface of the device, and from a lower part P2 inserted and fastened inside the upper part P2. The lower part P2 forms together with the upper part P1 an internal cavity CI for housing the electronic components (RF transmitter, RF receiver, processor and battery). As seen in the section A-A view, both of the upper and lower parts P1, P2 have ribs serving to lead vertical pressure forces from an upper surface and down through the structure into the cover below the device. Such ribs serve to improve the vertical strength of the device, so as to allow running over by a car etc. The through-going screws for attaching the device to the manhole/well/pit cover are positioned outside the inner portion of the upper part P1 including the lower part P2 and the inner cavity CI housing the electronic components. Thus, these screws only penetrate through the upper part P1. This feature, together with the fact that the lower part P2 is fit into the upper part P1 from below, eliminates the need for openings upwards on the upper part P1 to the inner cavity CI housing vulnerable components helps facilitating a waterproof sealing of the inner cavity CI.

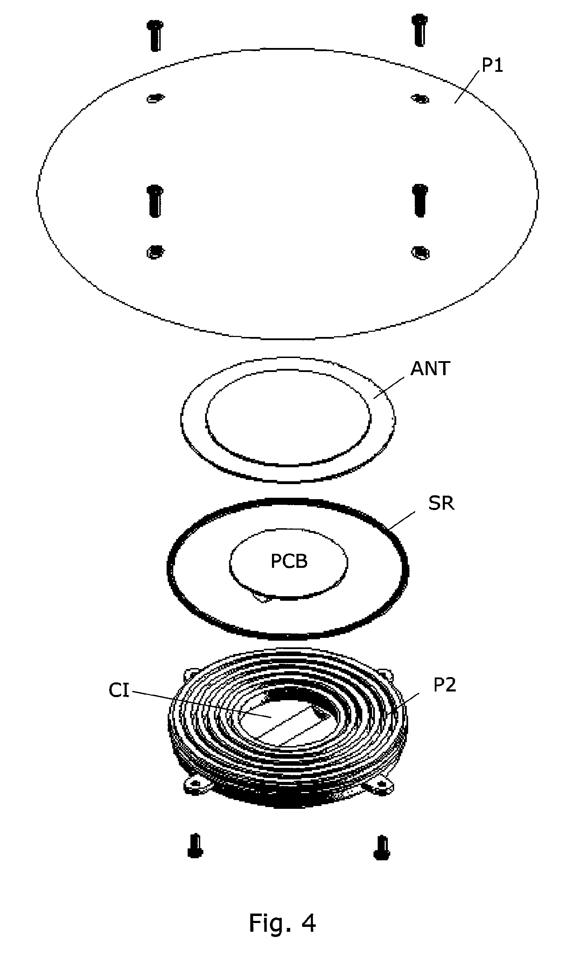

Fig. 4 illustrates an exploded 3D view of the embodiment also shown in Fig. 3, i.e. showing the communication device in a disassembled state. From the top, the upper part P1 is illustrated showing the surface, while the underside of the upper part P1 with ribs is not visible. The lower part P2 is seen to have a circular shape with concentric ribs suited to meet corresponding concentric ribs on the upper part P1, when assembled. The lower part has a central hollow part forming the inner cavity CI which allows space for the electronic components placed on an underside of a single Printed Circuit Board PCB holding all necessary electronic components and a battery. A sealing ring of rubber SR serves to provide a waterproof sealing between the upper and lower parts P1, P2. The transmitter antenna ANT is positioned above the PCB, and as seen, this antenna ANT is formed as a very simple and flat structure formed by two PCBs, where the lower PCB of the antenna ANT serves to form a ground plane, thus helping to provide a directivity pattern of the antenna ANT such that it primarily transmits RF energy in an upper hemisphere. There is no separate antenna for the RF receiver part, since this is not required for receiving the first RF signal RF1 from the meter M due to the short distance. Thus, having the receiver circuit positioned in a lower part of the device, below the transmitter antenna ANT, will provide sufficient RF power to directly drive the receiver circuit.

It is to be understood that even though the casing (CS) is in preferred embodiments are suited for position onto existing well or manhole covers without any modification of the cover, it is to be understood that the casing (CS) may as well be shaped such that proper mounting on to of the well or manhole cover required some kind of modification of the cover.

To sum up, the invention provides a communication device CD suited for communicating with a consumption meter placed in a well or manhole. The device CD including a casing CS suited for position on top of a cover or lid covering a well or manhole. The casing CS is generally flat and provides a watertight cavity for housing: 1) a wireless RF receiver RFR to receive a first RF signal RF1 including first data D1, 2) a processor to convert the first data D1 is into second data D2, e.g. by a simple copy or by selecting part of the first data D1, e.g. consumption data and/or consumption meter ID, 3) a wireless RF transmitter RFT to transmit a second RF signal F2 including the second data D1, and 4) a battery to power receiver RFR, processor P, and transmitter RFT. The device CD may serve as a radio repeater or a gateway. To save battery power, the device CD is preferably arranged to only activate the receiver RFR in time intervals where it is expected to receive the first RF signal RF1. Especially, the device CD may synchronize itself to a regular time interval for incoming signal RF1 in order to save power when communicating with a device transmitting at regular but unknown time intervals. The device CD may further save power before entering normal operation by providing a stand-by mode from which it can be woke-up by receiving a dedicated wake-up signal, e.g. an RF signal, an optical signal, a mechanical/vibration signal, or an acoustical signal.

Although the present invention has been described in connection with the specified embodiments, it is not intended to be limited to the specific form set forth herein. Rather, the scope of the present invention is limited only by the accompanying claims. In the claims, the term "comprising" or "including" does not exclude the presence of other elements. Additionally, although individual features may be included in different claims, these may possibly be advantageously combined, and the inclusion in different claims does not imply that a combination of features is not feasible and/or advantageous. In addition, singular references do not exclude a plurality. Thus, references to "a", "an", "first", "second" etc. do not preclude a plurality. Furthermore, reference signs in the claims shall not be construed as limiting the scope.

## Claims

1. A communication device (CD) including:
- a casing (CS) suited for position on top of a cover (CV) or lid covering a cavity (W), wherein the casing (CS) has an upper side with a generally flat shape and provides a watertight cavity for housing:
- a wireless Radio Frequency receiver (RFR) arranged to receive a first Radio Frequency signal (RF1) with first data (D1) represented therein,
- a processor (P) arranged to convert the first data (D1) into second data (D2) according to a predefined algorithm,
- a wireless Radio Frequency transmitter (RFT) arranged to transmit a second Radio Frequency signal (RF2) with the second data (D2) represented therein, and
- a battery (B) arranged to power the receiver (RFR), the processor (P), and the transmitter (RFT).

2. Communication device (CD) according to claim 1, wherein the wireless Radio Frequency transmitter (RFT) is arranged to repeat transmission of the second Radio Frequency signal (RF2), such as the wireless Radio Frequency transmitter (RFT) being arranged to repeat transmission of the second Radio Frequency signal (RF2) at regular time intervals.

3. Communication device (CD) according to any of the preceding claims, wherein the predefined algorithm specifies that the second data (D2) is identical to the first data (D1).

4. Communication device (CD) according to any of the preceding claims, wherein the predefined algorithm specifies that the second data (D2) includes at least one of: an Identification number extracted from the first data (D1), and data representing a consumed amount of a physical entity extracted from the first data (D1).

5. Communication device (CD) according to any of the preceding claims, including a predefined time interval in which the Radio Frequency receiver (RFR) is sensitive to the first Radio Frequency signal (RF1).

6. Communication device (CD) according to any of claims 1-4, wherein the communication device (CD) is arranged to synchronize to receive a first Radio Frequency signal (RF1) at a fixed time interval.

7. Communication device (CD) according to any of the preceding claims, including a stand-by mode of operation in which at least the transmitter (RFT) stops transmitting the second Radio Frequency signal (RF2).

8. Communication device (CD) according to claim 7, wherein the communication device (CD) is arranged to switch from the stand-by mode of operation to a normal mode of operation in response to a predefined wake-up signal, such as a wake-up signal being one of: a dedicated Radio Frequency signal, a mechanical interaction of the casing, an optical signal, and an acoustic signal.

9. Communication device (CD) according to claims 7 or 8, wherein the communication device (CD) is arranged to switch to the stand-by mode of operation after a predefined time interval in which the Radio Frequency receiver (RFR) has not received an incoming Radio Frequency signal (RF1).

10. Communication device (CD) according to any of the preceding claims, wherein the first Radio Frequency signal (RF1) and the second Radio Frequency signal (RF2) have different Radio Frequency attributes, such as the Radio Frequency attributes of the first and second Radio Frequency signals (RF1, RF2) being different with respect to at least one of: carrier frequency, modulation form, and protocol.

11. Communication device (CD) according to any of the preceding claims, wherein a directional sensitivity of the Radio Frequency receiver (RFR) is limited so as to suppress incident Radio Frequency signals from directions corresponding to an upper side of the casing (CS).

12. Communication device (CD) according to any of the preceding claims, wherein the second Radio Frequency signal (RF2) is transmitted with a directional pattern covering at least directions corresponding to an upper side of the casing (CS).

13. Communication device (CD) according to any of the preceding claims, arranged for two-way communication with at least one of: a device (M) located in a direction corresponding to a lower part of the casing (CS), and a device located in a direction corresponding to an upper part of the casing (CS).

14. Communication device (CD) according to any of the preceding claims, wherein the casing (CS) is made from a material and with a structure such that the communication device (CD) is able to withstand running over by a car, when placed on top of the cover (CV) or lid covering the cavity (W).

15. Communication device (CD) according to claim 14, wherein the casing (CS) is made from a polymeric material.

16. Communication device (CD) according to claim 14 or 15, wherein the casing (CS) has a metal part cast into the polymeric material, such as a metal part forming a part of an antenna for the Radio Frequency transmitter (RFT) or such as a metal part serving to reinforce the casing (CS).

17. Communication device (CD) according to any of the preceding claims, wherein the casing (CS) has a lower side which is generally flat.

18. Communication device (CD) according to any of the preceding claims, wherein the casing (CS) has a width which is at least 5 times its height, such as 5-10 times its height, such as 10-15 times its height, and wherein the casing (CS) is generally disk shaped.

19. Consumption meter system including
- a consumption meter (M), such as a water meter or and a gas meter, arranged to measure a quantity of a physical entity, wherein the consumption meter (M) is arranged to transmit a first Radio Frequency signal (RF1) including data (D1) representing the measured quantity, and
- a communication device (CD) according to any of claims 1-18.

20. Consumption meter system according to claim 19, wherein the consumption meter (M) is arranged for position in a cavity (W), such as a well or a man-hole, and wherein the communication device (CD) is arranged for position on top of a cover (CV) or lid covering the cavity (W).
